# EUROPEAN PATENT SPECIFICATION

(11) **EP 1 969 240 B1**
(45) Date of publication and mention of the grant of the patent: **25.01.2012**
(21) Application number: 06828034.6
(22) Date of filing: 19.12.2006
(51) Int. Cl.: F16B 13/10

(54) **INTEGRATED JOINER**
INTEGRIERTES VERBINDUNGSELEMENT
ÉLÉMENT DE JOINTURE INTÉGRÉ

(30) Priority: 19.12.2005 AU 2005244596
(43) Date of publication of application: 17.09.2008
(73) Proprietor: Pilja, Milan, Woodville West, SA 5011 (AU)
(72) Inventor: Pilja, Milan, Woodville West, SA 5011 (AU)
(74) Representative: ABG Patentes, S.L.
(86) International application number: PCT/AU2006/001928
(87) International publication number: WO 2007/070937

(56) References cited:
- EP-A1- 1 469 206
- EP-A1- 1 723 341
- EP-A1- 1 798 424
- EP-A2- 0 292 921
- WO-A1-2004/014611
- CH-A5- 601 681
- DE-A1- 3 520 789
- JP-A- 2000 130 414

## Description

### FIELD OF THE INVENTION

The present invention relates to a joiner or joining assembly for use in joining one article to another.

### DESCRIPTION OF THE PRIOR ART

Joiners and joining assemblies used to securely fasten countertops and other large panel items are known. For example, WO 03/035992 describes a novel joiner arrangement that is capable of providing the required fastening forces to provide a clamping effect between the joined articles. There is however known to be a number of considerable difficulties in applying equivalent clamping forces to articles that do not have the same surface area as that of a flat bench top, such as chairs, tables and other such furniture in which the clamping means has to be integrated within the structural member, be it an arm of a chair or the leg of a bed to its frame. Such joining is required most often in what is referred to as "flat-pack" or "knock-down" furniture, in which the furniture is provided to the end consumer in a disassembled arrangement, thus requiring some limited assembly by the purchaser. The joiners typically used in such "flat-pack" applications are connectors that either employ a traditional hex head fastener that has to be tightened by using an open ended spanner or an Allen key connector.

The hex head connector is particularly complicated for users in that due to the restrictive opening within which the hex head is located only allows for limited movement of the hex head by the open ended spanner such that with each turn of the open ended spanner the hex head is rotated only a small distance of its diameter and so requires substantial turning to effect proper tightening and clamping. This can take significant time and cause considerable frustration to the person assembling the item. In addition, the smaller the size of the connector and the accompanying hex head, the smaller then will be the access hole for the open ended spanner. This limitation of size then impacts upon the conditions in which such connections can be employed successfully.

Other types of commonly used connecting bolts for "flat-pack" applications or other situations requiring the joining of two articles, employs connectors having either a cam arrangement or an Allen key operated tightening assembly. There are known to be certain deficiencies with each of these types of connectors including the narrow range of clamping forces provided and the complexity in initial fitting of the components into the furniture or articles to be joined together.

JP 2000 130414A shows a metal joint fitting for large furniture comprising a fitting body buried in a first member and a connecting screwing shaft fixed and projected into a second member. The fitting body comprises a casing buried in the first member, with a pair of bevel gears detachably supported inside the casing and mutually clawed, with a rotatable part which can be operated from the exposed shaft end of the first bevel gear, and a penetrating female screw hole opening toward the outside of the casing concentrically arranged in the second bevel gear. DE3520789 A1 discloses an element for the vertical adjustment or connection of furniture, having a holding part on which an adjusting device, having a thread, is rotatably mounted, with the adjusting device having a first bevel gear which engages with a second rotatably drivable bevel gear and the first bevel gear having an internal thread into which an adjusting member can be screwed. EP1 469 206 A1 discloses a device for joining together two parts longitudinally, comprising a head integral with one part, a pin integral with the other part, with a gearing inside the head capable of being actuated in a direction perpendicular to the joining direction, thereby operating the pin to join the parts together.

It is has now been found by the present inventor that an improved joiner and joining assembly can be provided in which the joiner is capable of being of a relatively small size compared to that currently available so that it can be utilised in many different applications and provides for an ease of assembly and use.

### OBJECT OF THE INVENTION

It is an object of the present invention to provide a joiner that is relatively small in size and is convenient to install.

Another object of the invention is to provide a joiner that is capable of applying clamping forces to the articles to be joined.

It is an object of the present invention to overcome, or at least substantially ameliorate, the disadvantages and shortcomings of the prior art.

Other objects and advantages of the present invention will become apparent from the following description, taking in connection with the accompanying drawings, wherein, by way of illustration and example, an embodiment of the present invention is disclosed.

### SUMMARY OF THE INVENTION

According to the present invention, although this should not be seen as limiting the invention in any way, there is provided a joiner including at least one engaging member, a screw threaded shaft passing through the engaging member, at least one nut threadably engaging the shaft, a first gear member adapted to receive the screw threaded shaft, a second gear member captivity held within a slot within the engaging member and positioned to interengage with the first gear member and having a tool engaging means, both the first gear member and second gear member being located substantially within the engaging member whereby a turning of the second gear facilitates a tightening of the joiner and wherein the at least one engaging member further includes at least one securing means to captively hold the first gear member to allow rotation thereof.

With the engaging member securing the first gear by a securing means that allows rotation of the first gear, this then also holds the second gear in place so as to also allow relative rotation of the second gear within the engaging member.

In preference, the first and second gears are spur gears.

In preference, the second gear holds the first gear in place within the slot.

In preference, the securing means on the engaging member is a slot adapted to receive the first gear member.

In preference, the slot is integral with the engaging member.

In preference, the securing means is a retaining member positioned on the engaging member.

In preference, the retaining member projects into a recess adapted to or shaped to receive the first gear and upon insertion of the first gear into the first gear recess, the retaining member will hold the first gear in place so as to allow rotation of the first gear.

In preference, the second gear is located in a second gear recess.

In preference, the engaging member has an aperture thereon substantially perpendicular to the tool engaging means of the second gear member so as to allow access to the tool engaging means.

In preference, the tool engaging means is an aperture shaped to receive a tool bit.

In preference, the teeth profile of the first and second gear members is rounded so as to provide a point to point contact between the first and second gears.

In preference, the tooth face of the first and second gears is a spherical surface.

In preference, the tooth face of the first and second gear members is a spherical segment.

In preference, the tooth face is a concave section.

In preference, the tool engaging means is an aperture shaped to receive an Allen key.

In preference, the first gear member has a periphery flange.

In preference, the first gear member has a hub extension.

In preference, the hub extension has a face that abuts at least a section of the first gear member recess in the engaging member.

In preference, the first and second gear members are made from a composite plastic/glass material.

In preference, the engaging member is arcuate shaped to nest within a cavity within an article to be joined to another.

In preference, the first gear member has its teeth aligned so that they are facing in the direction of the body of the shaft.

### BRIEF DESCRIPTION OF THE DRAWINGS

By way of example, an employment of the invention is described more fully hereinafter with reference to the accompanying drawings, in which:
Figure 1 is a perspective view of a joiner according to a first embodiment of the invention,
Figure 2 is a side sectional view through B-B in figure 1, showing the internal gearing arrangement,

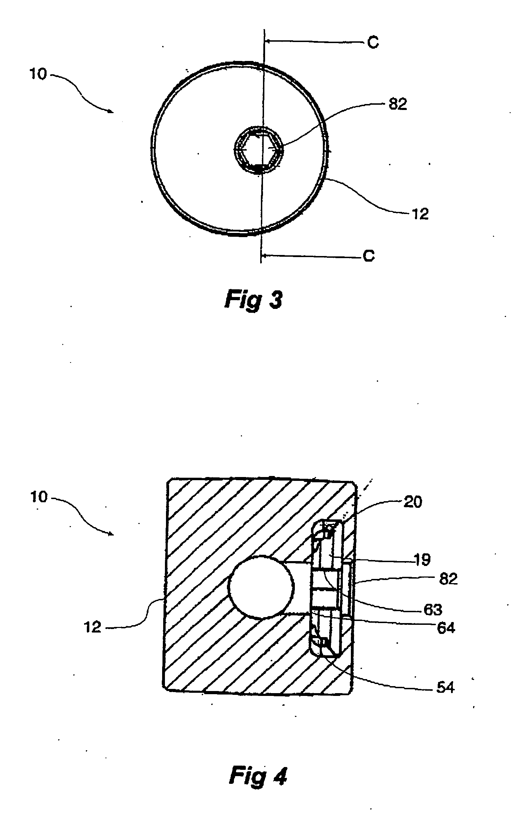

Figure 3 is a plan view of the joiner of figure 1,
Figure 4 is a side sectional view through C-C in figure 3,

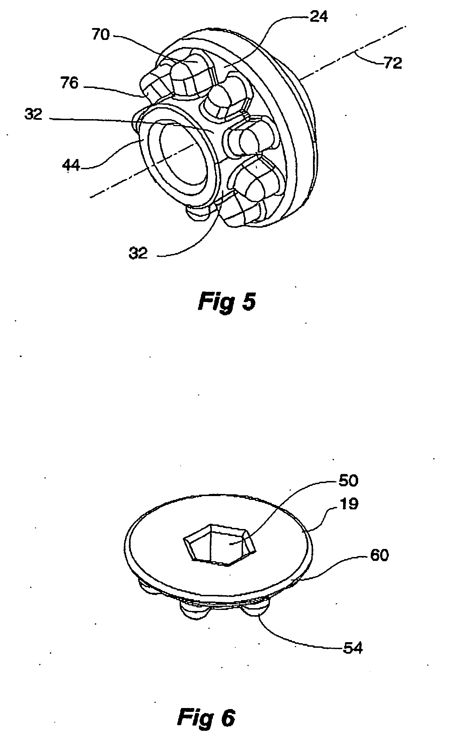

Figure 5 is a perspective view of a first gear member,
Figure 6 is a perspective view of the second gear member,
Figure 7 is a side view of the second gear member,
Figure 8 is a side sectional view through D-D in figure 7,
Figure 9 is a perspective view of a joiner according to a second embodiment of the invention,
Figure 10 is a perspective view of the joiner of Figure 9 with the holding means and first gear member removed,
Figure 11 is a perspective view of the holding means that slots within the joiner as shown in Figure 10.

### DETAILED DESCRIPTION OF THE INVENTION

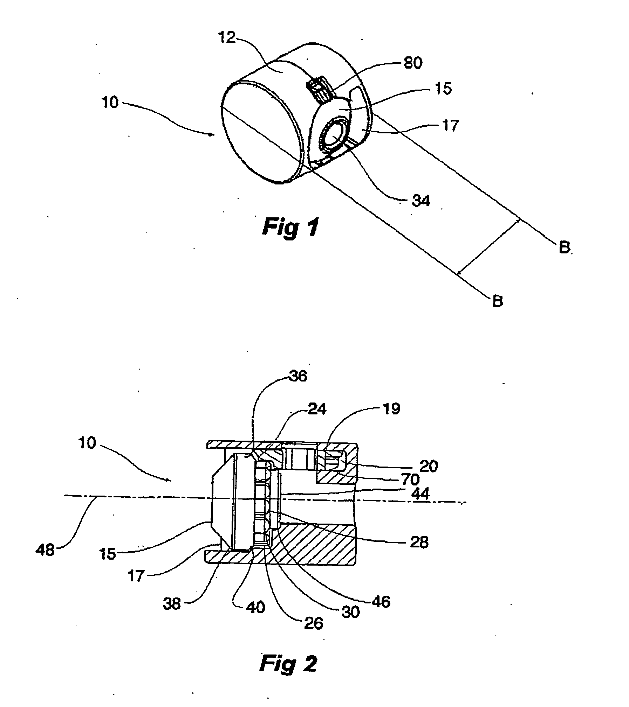

The joiner 10 of figure 1 has an engaging member 12 being of a substantially circular shape about its diameter, a first gear member 15 located within a first recess 17 and a second gear member 19 located within a second recess 20.

The first gear member 15 frusto conical back end 22 and a face 24 with the teeth 26 positioned thereon. The hub 28 of the first gear member 15 extends beyond a first tooth top 30 to give a hub extension 32. The hub 28 has an aperture 34 running there through and the internal face of the aperture 34 is screw threaded to receive a shaft.

For purposes of clarity, the shaft that engages with the aperture 34 is not shown, but it would be clear to those skilled in the art the shape and purpose of such a shaft.

The first gear member 15 circumventral band 36 having beveled ends 38 and 40. The beveled end 40, adjacent to the face 24 is shaped to mirror substantially the inner face 42 of the first recess 17. Additionally, the face 44 of hub extension 32 is similarly shaped to match the inner platform face 46 of the first recess 17.

In this way then the first gear member 15 is shaped so as to fit within the first recess 17 in a substantially complementary fashion such that the first gear member 15 is still relatively free to rotate about its axis 48.

The second gear member 19 has an aperture 50 for receiving a tip of a tool of complimentary shape. The face 52 of the second gear member 19 has teeth 54 thereon and the circumferential band 56 of the second gear member 19 has a beveled face 58 and an arcuate edge 60.

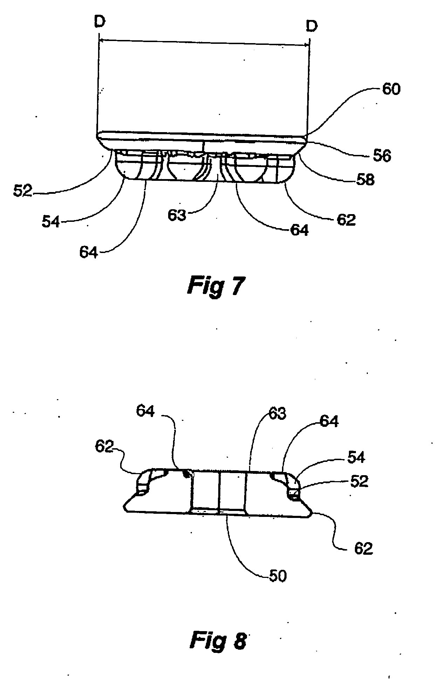

The teeth 54 of the second gear member 19 have a tooth face 62 that has a spherical surface traveling substantially the first length of the addendum. As can be seen in figure 7, for example, the resultant tooth face 62 has a profile that results in reduced or minimal contact of the tooth 54 with the inner face 70 of the second recess 20 and the hub face 64 of the hub 63 is approximately parallel with the tooth top 64. In this manner then there is minimal friction between the second gear member 19 and the inner face 70.

The first gear member 15 also has teeth 70 of a spherical shape. The teeth 70 extend from the gear face 24 and the hub 28 both in the plane of the gear axis and the plane of rotational being the plane perpendicular to the gear axis 72. In this manner then each tooth top 76 provides only a minimal contact area to the inner face 78 so that rotation of the first gear member 15 about its axis of rotation provides minimal resistance. When this particular tooth shaped 70 is compared to that of conventional gearing which typically has a flat top surface with a relatively sharp tooth chamfer, that being the level between the end of the tooth surface, this can then lead to the gear teeth digging into the inner surface 78 that it is pushing against. By employing the substantially spherical shaped teeth 70, substantial pressure can still be applied by the first gear member 15 against the inner face 78 without significant reduction in performance.

Additionally, the first gear 15 has a hub extension 32 with a face 44 shaped to compliment the inner faced platform 46 of the first recess 17 so that again any pressure applied by the first gear member 15 to the first recess 17 will be evenly distributed across a larger surface area.

The first gear member 15 also holds the second gear member 19 in place by the urging of the teeth 26 of the first gear member 15 against the teeth 54 of the second gear member 19. What will of course be appreciated immediately by those skilled in this particular art is that due to the particular shape of both the first and second gear members respectively there will be a minimal contact area between each of the gear members. The joiner 10 further has a retaining tab 80, that is suitably flexible to allow insertion of the first gear member 15 into the first recess 17 thus forcing the retaining tab 80 away from the first recess 17 such that the retaining tabs 80 ride over the beveled end 40 and the circumventral band 36 to then hold the first gear 15 in place. This then of course holds the second gear member 19 in place.

Upon a tightening of the joiner 10 a tool tip is placed within the aperture 82 of the engaging member 12 so that the tool tip is able to fit snuggly within the aperture 50 of the first gear member 19 so that when the tool tip is rotated the second gear member 19 also rotates and the gear teeth 54 of the second gear member mesh and interact with the teeth 26 of the first gear member 15 to effect the rotation of the first gear member 15 about axis 48 to effect a tightening of an engaged shaft passing through the hub 28. The aperture 50 could be shaped to receive any conventional drive head such as a Philips head or flat headed screw driver but perhaps most useful is an Allen key shape.

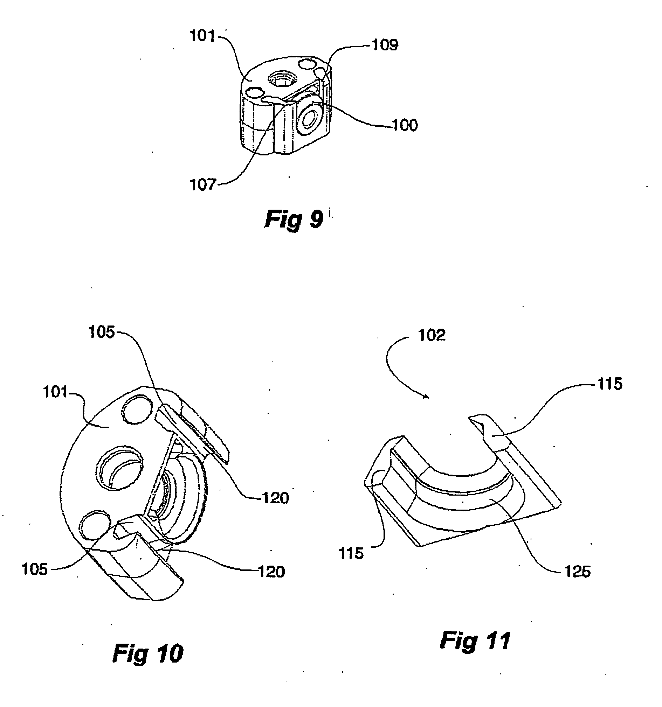

In an alternative embodiment as shown in figure 9, the second gear member is held in place by insertion of the second gear member 100 into a slot 105 that secures the second gear member 100 whilst still allowing it to rotate about its axis. The slot 105 is shaped to provide a nesting fit of the second gear member 100 and may be either integral with the engaging member 101 or formed as a separate part that is inserted itself into the engaging member 101.

The retaining means 102 has inclined inner surfaces 107 and 109 shaped to compliment the frusto conical shaped face of the back end 22 of the first gear member 15. Figure 10 shows the joiner with the retaining section 102 removed. The extending members 115 nest within the complimentary shaped openings 120 to captivity hold the first gear member in place, the inner surface 125 of 102 so shaped to contour that of the back end 22 of the first gear member 100.

Accordingly, a threaded shaft can be inserted into the first gear member 100 so as to engage such. The other end of the treaded shaft can be either fitted with a nut or can be affixed to a section of furniture to be joined thereto, such that the first joining element is in a separate section of furniture. Then, once engaged, the first gear member can be rotated by relative rotation of the second gear member by rotating a suitable shaped tool tip inserted in the aperture within the second gear member so as to effect a tightening of the joiner.

Other mounting methods for the first gear member may be utilized other than those mentioned here, without necessarily departing from the scope of the invention.

The joiner 10 is constructed from a suitably resilient material, preferably being a glass/plastics composite tolerable of forces and pressures appropriate to manufacturing industries, such as furniture construction, using techniques such as metal injection moulding (MIM), or cast molding so as to produce such intricate, relatively miniature, gear shapes and angles.

From the above then it is clear to see that the current invention now provides for a joiner 10 that can be made in a neat compact shape suitable for use in a number of industries where end to end joining is required, such as flat-pack furniture, and that a user can quickly and effectively tighten the joiner 10 by use of standard, conventional tool shapes, such as an Allen key either manually or by power tool. Thin then results in a greater reduced time and effort of construction whilst providing high clamping forces.

Although the invention has been herein shown and described in what is conceived to be the most practical and preferred embodiment, it is recognized that departures can be made within the scope of the invention, which is not to be limited to the details described herein but it is to be accorded the full scope of the appended claims so as to embrace any and all equivalent devices and apparatus.

## Claims

1. A joiner (10) including at least one engaging member (12), a screw threaded shaft passing through the engaging member, at least one nut threadably engaging the shaft, a first gear member (15), being a spur gear having a screw threaded aperture (34) to receive the screw threaded shaft, a second gear member (19) captively held within a first slot (20) within the engaging member and positioned to interengage with the first gear member and having a tool engaging means (50), both the first gear member and second gear member being located substantially within the engaging member whereby a turning of the second gear facilitates a tightening of the joiner and wherein the at least one engaging member further includes a second slot (17) adapted to receive the first gear member, to captively hold the first gear member to allow rotation thereof, the first gear member having its teeth aligned facing in the direction of the body of the shaft, the first gear holding the second gear in place within the first slot (20), wherein a securing means (80,115) is holding the first gear (15, 100) in place in the second slot, **characterized in that** the securing means is a discrete retaining member which is flexible and positioned on the engaging member, so as to project into a recess adapted to or shaped to receive the first gear.

2. The joiner (10) of claim 1, **characterized in that** the first slot is integral with the engaging member.

3. The joiner (10) of claims 1 or 2, **characterized in that** the second gear is located in a second gear recess.

4. The joiner (10) of claim 3, **characterized in that** the engaging member (12) has an aperture (82) thereon substantially perpendicular to the tool engaging means of the second gear member (19) so as to allow access to the tool engaging means.

5. The joiner (10) of claim 4, **characterized in that** the tool engaging means is an aperture (50) shaped to receive a tool bit.

6. The joiner (10) of claim 5, **characterized in that** the teeth profile of the first (15) and second (19) gear members is rounded so as to provide a point to point contact between the first and second gears.

7. The joiner (10) of claim 6, **characterized in that** the tooth face of the first and second gears is a spherical surface.

8. The joiner (10) of claim 7, **characterized in that** the tooth face of the first (15) and second (19) gear members is a spherical segment.

9. The joiner (10) of claim 8, **characterized in that** the tooth face is a concave section.

10. The joiner (10) of claim 9, **characterized in that** the tool engaging means is an aperture (50) shaped to receive an Allen key.

11. The joiner (10) of claim 10, **characterized in that** the first gear member (15) has a periphery flange.

12. The joiner (10) of claim 11, **characterized in that** the first gear member (15) has a hub extension (32).

13. The joiner (10) of claim 12, **characterized in that** the hub extension has a face (44) that abuts at least a section of the first gear member recess (17) in the engaging member (12).

14. The joiner (10) of claim 13, **characterized in that** the first (15) and second (19) gear members are made from a composite plastic/glass material.

15. The joiner (10) of claim 14, **characterized in that** the engaging member (12) is arcuate shaped to nest within a cavity within an article to be joined to another.

16. The joiner (10) of claim 15, **characterized in that** the first gear member (15) has its teeth aligned so that they are facing in the direction of the body of the shaft.

## Patentansprüche

1. Verbinder (10) mit mindestens einem Eingreifelement (12), einer sich durch das Eingreifelement erstreckenden Gewindestange, mindestens einer in Gewindeeingriff mit der Stange befindlichen Mutter, einem ersten Zahnradelement (15), bei welchem es sich um ein Stirnrad mit einer Gewindeöffnung (34) zum Aufnehmen der Gewindestange handelt, einem zweiten Zahnradelement (19) das unverlierbar in einem ersten Schlitz (20) in dem Eingreifelement gehalten ist und zum Zusammengreifen mit dem ersten Zahnradelement positioniert ist und eine Werkzeugeingriffseinrichtung (50) aufweist, wobei sowohl das erste Zahnradelement als auch das zweite Zahnradelement im Wesentlichen in dem Eingreifelement angeordnet ist, wodurch das Drehen des zweiten Zahnrades das Anziehen des Verbinders erleichtert, und wobei das mindestens eine Eingreifelement ferner einen zweiten Schlitz (17) zum Aufnehmen des ersten Zahnradelements aufweist, um das erste Zahnradelement unverlierbar drehbar zu halten, wobei die Zähne des ersten Zahnradelements in Richtung des Körpers der Stange gewandt ausgerichtet sind, wobei das erste Zahnrad das zweite Zahnrad in dem ersten Schlitz (20) in Position hält, wobei eine Sicherungseinrichtung (80, 115) das erste Zahnrad (15, 100) in dem zweiten Schlitz in Position hält, **dadurch gekennzeichnet, dass** die Sicherungseinrichtung ein separates Rückhalteelement ist, das flexibel ist und in dem Eingreifelement derart angeordnet ist, dass es in eine Ausnehmung ragt, die zur Aufnahme des ersten Zahnrades geeignet oder ausgebildet ist.

2. Verbinder (10) nach Anspruch 1, **dadurch gekennzeichnet, dass** der erste Schlitz einstückig mit dem Eingreifelement ausgebildet ist.

3. Verbinder (10) nach Anspruch 1 oder 2, **dadurch gekennzeichnet, dass** das zweite Zahnrad in einer Ausnehmung für das zweite Zahnrad angeordnet ist.

4. Verbinder (10) nach Anspruch 3, **dadurch gekennzeichnet, dass** das Eingreifelement (12) eine Öffnung (82) aufweist, die im Wesentlichen senkrecht zu der Werkzeugeingriffseinrichtung des zweiten Zahnradelements (19) verläuft, um den Zugang zu der Werkzeugangriffseinrichtung zu ermöglichen.

5. Verbinder (10) nach Anspruch 4, **dadurch gekennzeichnet, dass** die Werkzeugeingriffseinrichtung eine zur Aufnahme eines Werkzeugbits ausgebildete Öffnung (50) ist.

6. Verbinder (10) nach Anspruch 5, **dadurch gekennzeichnet, dass** die Zahnprofile des ersten (15) und des zweiten (19) Zahnradelements abgerundet sind, um einen Punkt-zu-Punkt-Kontakt zwischen dem ersten und dem zweiten Zahnrad zu bewirken.

7. Verbinder (10) nach Anspruch 6, **dadurch gekennzeichnet, dass** die Zahnfläche des ersten und des zweiten Zahnrades eine sphärische Fläche ist.

8. Verbinder (10) nach Anspruch 7, **dadurch gekennzeichnet, dass** die Zahnfläche des ersten (15) und des zweiten (19) Zahnradelements ein Kugelsegment ist.

9. Verbinder (10) nach Anspruch 8, **dadurch gekennzeichnet, dass** die Zahnfläche eine Hohlkehle ist.

10. Verbinder (10) nach Anspruch 9, **dadurch gekennzeichnet, dass** die Werkzeugeingriffseinrichtung eine zur Aufnahme eines Innensechskantschlüssels ausgebildete Öffnung (50) ist.

11. Verbinder (10) nach Anspruch 10, **dadurch gekennzeichnet, dass** das erste Zahnradelement (15) einen Umfangsflansch aufweist.

12. Verbinder (10) nach Anspruch 11, **dadurch gekennzeichnet, dass** das erste Zahnradelement (15) eine Nabenverlängerung (32) aufweist.

13. Verbinder (10) nach Anspruch 12, **dadurch gekennzeichnet, dass** die Nabenverlängerung eine Fläche (44) aufweist, die an zumindest einem Abschnitt der für das erste Zahnradelement vorgesehenen Ausnehmung (17) in dem Eingriffselement (12) anliegt.

14. Verbinder (10) nach Anspruch 13, **dadurch gekennzeichnet, dass** das erste (15) und das zweite (19) Zahnradelement aus einem Kunststoff/Glas-Verbundmaterial bestehen.

15. Verbinder (10) nach Anspruch 14, **dadurch gekennzeichnet, dass** das Eingriffselement (12) bogenförmig ausgebildet ist, um in eine Ausnehmung in einem mit einem anderen Artikel zu verbindenden Artikel eingesetzt werden zu können.

16. Verbinder (10) nach Anspruch 15, **dadurch gekennzeichnet, dass** die Zähne des ersten Zahnradelements (15) derart ausgerichtet sind, dass sie dem Körper der Stange zugewandt sind.

## Revendications

1. Dispositif d'assemblage (10) comprenant au moins un élément de mise en prise (12), une tige filetée de vis passant à travers l'élément de mise en prise, au moins un écrou mettant en prise par filetage la tige, un premier élément d'engrenage (15), qui est un engrenage droit ayant une ouverture filetée de vis (34) pour recevoir la tige filetée de vis, un deuxième élément d'engrenage (19) maintenu de manière captive à l'intérieur d'une première fente (20) à l'intérieur de l'élément de mise en prise et positionné pour se mettre en prise avec le premier élément d'engrenage et ayant des moyens de mise en prise d'outil (50), à la fois le premier élément d'engrenage et le deuxième élément d'engrenage étant positionnés sensiblement à l'intérieur de l'élément de mise en prise moyennant quoi une rotation du deuxième engrenage facilite un serrage du dispositif d'assemblage et dans lequel le au moins un élément de mise en prise comprend en outre une deuxième fente (17) adaptée pour recevoir le premier élément d'engrenage, afin de maintenir de manière captive le premier élément d'engrenage pour permettre sa rotation, le premier élément d'engrenage ayant ses dents alignées orientées dans la direction de corps de la tige, le premier engrenage maintenant le deuxième engrenage en place à l'intérieur de la première fente (20), dans lequel des moyens de fixation (80, 115) maintiennent le premier engrenage (15, 100) en place dans la deuxième fente, **caractérisé en ce que** les moyens de fixation sont un élément de retenue distinct qui est flexible et positionné sur l'élément de mise en prise, afin de faire saillie dans un évidement adapté ou formé pour recevoir le premier engrenage.

2. Dispositif d'assemblage (10) selon la revendication 1, **caractérisé en ce que** la première fente est solidaire avec l'élément de mise en prise.

3. Dispositif d'assemblage (10) selon les revendications 1 ou 2, **caractérisé en ce que** le deuxième engrenage est positionné dans un deuxième évidement d'engrenage.

4. Dispositif d'assemblage (10) selon la revendication 3, **caractérisé en ce que** l'élément de mise en prise (12) a une ouverture (82) sur ce dernier sensiblement perpendiculaire aux moyens de mise en prise d'outil du deuxième élément d'engrenage (19) afin de permettre l'accès aux moyens de mise en prise d'outil.

5. Dispositif d'assemblage (10) selon la revendication 4, **caractérisé en ce que** les moyens de mise en prise d'outil sont une ouverture (50) formée pour recevoir un outil rapporté.

6. Dispositif d'assemblage (10) selon la revendication 5, **caractérisé en ce que** le profil de dents des premier (15) et deuxième (19) éléments d'engrenage est arrondi afin de fournir un contact point par point entre les premier et deuxième engrenages.

7. Dispositif d'assemblage (10) selon la revendication 6, **caractérisé en ce que** la face de dent des premier et deuxième engrenages est une surface sphérique.

8. Dispositif d'assemblage (10) selon la revendication 7, **caractérisé en ce que** la face de dent des premier (15) et deuxième (19) éléments d'engrenage est un segment sphérique.

9. Dispositif d'assemblage (10) selon la revendication 8, **caractérisé en ce que** la face de dent est une section concave.

10. Dispositif d'assemblage (10) selon la revendication 9, **caractérisé en ce que** les moyens de mise en prise d'outil sont une ouverture (50) formée pour recevoir une clé hexagonale.

11. Dispositif d'assemblage (10) selon la revendication 10, **caractérisé en ce que** le premier élément d'engrenage (15) a un rebord périphérique.

12. Dispositif d'assemblage (10) selon la revendication 11, **caractérisé en ce que** le premier élément d'engrenage (15) a une extension de moyeu (32).

13. Dispositif d'assemblage (10) selon la revendication 12, **caractérisé en ce que** l'extension de moyeu a une face (44) qui vient en butée contre au moins une section du premier évidement d'élément d'engrenage (17) dans l'élément de mise en prise (12).

14. Dispositif d'assemblage (10) selon la revendication 13, **caractérisé en ce que** les premier (15) et deuxième (19) éléments d'engrenage sont réalisés à partir d'un matériau en plastique/verre composite.

15. Dispositif d'assemblage (10) selon la revendication 14, **caractérisé en ce que** l'élément de mise en prise (12) est de forme arquée pour s'emboîter à l'intérieur d'une cavité à l'intérieur d'un article destiné à être assemblé à un autre.

16. Dispositif d'assemblage (10) selon la revendication 15, **caractérisé en ce que** le premier élément d'engrenage (15) a ses dents alignées de sorte qu'elles sont orientées dans la direction du corps de la tige.
